# EUROPEAN PATENT SPECIFICATION

(11) **EP 0 519 749 B1**
(45) Date of publication and mention of the grant of the patent: **05.02.1997**
(21) Application number: 92305676.6
(22) Date of filing: 19.06.1992
(51) Int. Cl.: C08L 59/00

(54) **Weather-resistant polyacetal resin composition**
Witterungsbeständige Polyacetalharzzusammensetzung
Composition de résine de polyacétal résistant aux intempéries

(30) Priority: 20.06.1991 JP 148736/91
(43) Date of publication of application: 23.12.1992
(73) Proprietor: POLYPLASTICS CO. LTD., Chuo-Ku Osaka-shi Osaka 541 (JP)
(72) Inventor: Katsumata, Toru, Fuji-shi, Shizuoka (JP); Matsunaga, Nobuyuki, Fuji-shi, Shizuoka (JP)
(74) Representative: Tebbit, Antony Hugh Edward

(56) References cited:
- EP-A- 0 192 356
- EP-A- 0 390 146
- EP-A- 0 421 723
- EP-A- 0 494 534

## Description

### FIELD OF THE INVENTION

This invention relates to a polyacetal resin composition having good weatherability and suppressed surface glossiness. More particularly, it relates to a polyacetal resin composition, which is obtained by blending a polyacetal resin with a weathering (light) stabiliser and a specified core/shell polymer and has good weatherability and suppressed surface glossiness while maintaining the excellent mechanical properties, frictional wear resistance and mouldability inherent in polyacetal, as well as moulded products thereof.

### DESCRIPTION OF THE RELATED ART

It is well known that polyacetal resins have been widely employed in recent years in various fields as engineering resins excellent in physical properties such as mechanical and electrical characteristics and chemical properties such as chemical resistance and heat resistance. By way of example, EP-A-0 390 146 (Takeda Chemical Industries Ltd) discloses a core-shell polymer which comprises a rubbery polymer core and a glassy polymer shell and has substantially no detectable anion. Polyoxymethylene resin compositions containing such a core shell polymer are stated to have good impact strength, thermal stability, strength, and elongation along a weld line, and also to have good weatherability, and to be suitable for the manufacture of such products as gears and reels.

It is sometimes required, however, that polyacetal resins have further specialised properties, as the application range of the resins is widened. For example, it has been required to develop a material having good weatherability and also a lowered surface glossiness when processed into a moulded product. These less glossy polyacetal resins, i.e. less light-reflecting resins, are sometimes needed, for example, for interior and exterior automotive trims and optical instruments in order to suppress visual irritation due to reflected light, to impart an appearance suggestive of high-quality and to prevent any malfunction of the instruments due to reflected light.

Also, in the fields of common electrical apparatus and building materials, there arise more and more opportunities of combining various materials depending on the purpose in view. Compared with other common resins, polyacetal resins tend to have a high surface glossiness and, therefore, lack harmony with other materials in the case of a product consisting of various materials. Thus the application of polyacetal resins to products, the appearance of which is regarded as important, is seriously restricted. Also, such materials should maintain good weatherability, in case they are exposed outdoors.

A known means for satisfying these requirements comprises adding inorganic fillers such as calcium carbonate, talc or calcium silicate to polyacetal resins.

In order to reduce the glossiness to a desired level, it is required to add a large amount of talc to a polyacetal resin, which results in disadvantages, namely, the deterioration of the weatherability and whitening of the resin. Furthermore, other mechanical properties, in particular, elongation and toughness are deteriorated in this case. As a result, a moulded article produced from such a polyacetal resin would be easily broken under a stress during a post-treatment or as a result of shock due to, for example, falling.

It has been usual practice to transfer a grained pattern formed on the surface of a mould to the surface of a moulded product so as to reduce the surface glossiness. In the case of a polyacetal resin, the high surface glossiness and high crystallinity make the transfer difficult and, therefore, any satisfactory effect can be scarcely achieved by this method at present.

It has been therefore urgently required to develop a polyacetal resin material which is excellent in mechanical properties, in particular, elongation and toughness, and weatherability and has a suppressed surface glossiness.

### OBJECT OF THE INVENTION

The present invention is based on the results of extensive studies made in order to develop a polyacetal resin material which has good weatherability and gives a considerably reduced surface glossiness of a moulded product while reducing or eliminating any deterioration of the properties inherent in polyacetal resins.

### SUMMARY OF THE INVENTION

According to the present invention there is provided a weather-resistant polyacetal resin composition which is capable of being moulded in a specular mould to form an article having a low glossiness, i.e. a glossiness of 30% or below determined in accordance with JIS K7105 by the method herein specified, and which is produced by blending:
(A) 100 parts by weight of a polyacetal resin with
(B) 0.01 to 5 parts by weight of a weathering (light) stabiliser and
(C) 1 to 50 parts by weight of a core/shell polymer comprising or consisting of a core of a rubber-like polymer and a shell of a glass-like polymer comprising or consisting essentially of a vinyl copolymer having an oxygen-containing polar group.

The invention includes moulded products obtained from such a resin composition.

Operating in accordance with the present invention, wherein a polyacetal resin is blended with a weathering stabiliser and a specified core/shell polymer, allows the production of a resin composition which is excellent in weatherability and effective in considerably reducing the glossiness of the surface of a moulded product while maintaining the well-balanced mechanical properties of polyacetal.

The polyacetal resin composition having a low glossiness of the present invention can be suitably used in interior automotive trims which should have an appearance suggestive of high-quality and a good weathering (light) resistance while avoiding the reflection of light, and for the production of optical instruments, building materials and household goods.

### DETAILED DESCRIPTION OF THE INVENTION

Now the constituents of preferred embodiments of the weather-resistant polyacetal resin composition of the present invention will be described in detail.

To begin with, the polyacetal resin (A) to be used in the present invention is preferably a polymer compound having oxymethylene groups -(CH₂O-) as the main constituting unit. It may be selected from among polyoxymethylene homopolymer, copolymers, terpolymers and block copolymers each containing a small amount of other constituting unit(s) in addition to the oxymethylene groups. Not only a straight-chain molecule, but also branched or cross-linked ones may be used in the present invention. The degree of polymerisation of this polyacetal resin is not particularly restricted.

Next, the weathering (light) stabiliser (B) to be used in the present invention may be one or more materials preferably selected from the group consisting of (1) benzotriazole derivatives, (2) benzophenone derivatives, (3) oxanilide derivatives, (4) aromatic benzoates, (5) cyanoacrylates and (6) hindered amines.

Examples of these substances are as follows.
(1) BENZOTRIAZOLE DERIVATIVES include:
   2-(2′-hydroxy-5′-methyl-phenyl)benzotriazole,
   2-(2′-hydroxy-3′,5′-di-t-butyl-phenyl)benzotriazole;
   2-(3,5-di-t-amyl-2-hydroxyphenyl)benzotriazole,
   2-(2′-hydroxy-3′,5′-di-isoamylphenyl)benzotriazole,
   2-[2-hydroxy-3,5-bis-(α,α-dimethylbenzyl)phenyl]-benzotriazole and
   2-(2′-hydroxy-4′-octoxyphenyl)-benzotriazole.
(2) BENZOPHENONE DERIVATIVES include:
   2,4-dihydroxybenzophenone, 2-hydroxy-4-methoxybenzophenone,
   2-hydroxy-4-octoxybenzophenone,
   2-hydroxy-4-dodecyloxybenzophenone,
   2,2′-dihydroxy-4-methoxybenzophenone,
   2,2′-dihydroxy-4,4′-dimethoxybenzophenone,
   2-hydroxy-4-methoxy-5-sulfobenzophenone and
   2-hydroxy-4-oxybenzylbenzophenone.
(3) OXANILIDE DERIVATIVES include:
   N-(2-ethyl-phenyl)-N′-(2-ethoxy-5-t-butylphenyl)-oxamide and N-(2-ethyl-phenyl)-N′-(2-ethoxyphenyl)oxamide.
(4) AROMATIC BENZOATES include:
   p-t-butylphenyl salicylate and p-octylphenyl salicylate.
(5) CYANOACRYLATES include:
   2-ethylhexyl 2-cyano-3,3-diphenylacrylate and ethyl 2-cyano-3,3-diphenylacrylate.
(6) HINDERED AMINES include:
   piperidine derivatives having a steric hindrance group, such as 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-methoxy-2,2,6,6-tetramethylpiperidine, 4-benzoyloxy-2,2,6,6-tetramethylpiperidine, 4-cyclohexyloxy-2,2,6,6-tetramethylpiperidine, 4-phenoxy-2,2,6,6-tetramethylpiperidine, 4-benzyloxy-2,2,6,6-tetramethylpiperidine, 4-(phenylcarbamoyloxy)-2,2,6,6-tetramethylpiperidine, bis(2,2,6,6-tetramethyl-4-piperidyl) oxalate, bis(2,2,6,6-tetramethyl-4-piperidyl) malonate, bis(2,2,6,6-tetramethyl-4-piperidyl) adipate, bis(2,2,6,6-tetramethyl-4-piperidyl) sebacate, bis(1,2,2,6,6-pentamethyl-4-piperidyl) sebacate, bis(2,2,6,6-tetramethyl-4-piperidyl) terephthalate, 1,2-bis(2,2,6,6-tetramethyl-4-piperidyloxy)ethane, bis(2,2,6,6-tetramethyl-4-piperidyl)hexamethylene 1,6-dicarbamate, bis(1-methyl-2,2,6,6-tetramethyl-4-piperidyl) adipate and tris(2,2,6,6-tetramethyl-4-piperidyl) benzene-1,3,5-tricarboxylate. In addition, piperidine derivative polycondensates such as dimethyl succinate / 1-(2-hydroxyethyl)-4-hydroxy-2,2,6,6-tetramethyl-piperidine polycondensate are also usable in the present invention.

Either one or more of these weathering (light) stabilisers are employed. It is preferable to use weathering stabilisers selected from among the above-mentioned compounds (1) to (5) together with hindered amine(s) (6). It is most preferable to use a benzotriazole derivative (1) together with a hindered amine (6).

The above-mentioned weathering (light) stabiliser may be used in a (total) amount of from 0.01 to 5 parts by weight, preferably from 0.02 to 3 parts by weight, per 100 parts by weight of the component (A). When the content of this stabiliser is excessively small, the desired effect can be hardly achieved. On the other hand, an excessively large content thereof causes not only an economic disadvantage but also deterioration in mechanical properties and staining of moulds.

The present invention requires the polyacetal resin (A) containing the weathering (light) stabiliser (B) to be blended with a specified core/shell polymer (C).

The core/shell polymer to be used in the present invention consists of a core of a rubber-like polymer and a shell of a glass-like polymer comprising a vinyl copolymer having an oxygen-containing polar group.

Such a core/shell polymer may be obtained by, for example, a continuous multi-stage emulsion polymerisation, i.e., so-called seed emulsion polymerisation, wherein a polymer formed in the preceding stage is successively coated with another polymer formed in the subsequent stage.

In the seed generating stage, it is preferable to initiate the above-mentioned emulsion polymerisation by adding a monomer, a surfactant and water to a reactor and then adding a polymerisation initiator.

In the first polymerisation stage, a rubber-like polymer is formed.

Examples of monomers constituting said rubber-like polymer include conjugated dienes, alkyl acrylates having a C₂ to C₈ alkyl group and mixtures thereof.

These monomers are polymerised so as to form a rubber-like polymer which preferably has a glass transition temperature of -20°C or below.

As examples of conjugated dienes, butadiene, isoprene and chloroprene may be cited. As examples of alkyl acrylates having a C₂ to C₈ alkyl group, ethyl acrylate, propyl acrylate, butyl acrylate, cyclohexyl acrylate and 2-ethylhexyl acrylate may be cited. Butyl acrylate is particularly preferred as the rubber-like polymer.

In the first polymerisation stage, monomers copolymerisable with said conjugated dienes and alkyl acrylates may be copolymerised. Examples of such monomers include aromatic vinyls, for example, styrene, vinyltoluene and α-methylstyrene, aromatic vinylidene, vinyl cyanides, for example, acrylonitrile and methacrylonitrile, vinylidene cyanide, and alkyl methacrylates, for example, methyl methacrylate and butyl methacrylate.

When no conjugated diene is used in the first polymerisation stage or the content of the conjugated diene(s), if employed, is less than 20% by weight based on the total monomers to be used in the first stage, a polymer of a good impact resistance can be obtained by using a small amount of a cross-linking monomer and a grafting monomer.

Examples of the cross-linking monomer include aromatic divinyl monomers such as divinylbenzene and alkanepolyol polyacrylates or alkanepolyol polymethacrylates such as ethylene glycol diacrylate, ethylene glycol dimethacrylate, butylene glycol diacrylate, hexanediol diacrylate, hexanediol dimethacrylate, oligoethylene glycol diacrylate, oligoethylene glycol dimethacrylate, trimethylolpropane diacrylate, trimethylolpropane dimethacrylate, trimethylolpropane triacrylate and trimethylolpropane trimethacrylate. It is particularly preferred to use butylene glycol diacrylate or hexanediol diacrylate.

Examples of the grafting monomer include allyl esters of unsaturated carboxylic acids, such as allyl acrylate, allyl methacrylate, diallyl maleate, diallyl fumarate and diallyl itaconate. It is particularly preferable to use allyl methacrylate.

These cross-linking monomers and grafting monomers may be used in an amount of from 0 to 5% by weight, preferably from 0.1 to 2% by weight, based on the total monomers to be used in the first stage.

The content of the core of this rubber-like polymer may preferably range from 50 to 90% by weight based on the whole core/shell polymer. When the content of the core is less than the lower limit or exceeds the upper limit specified above, it is sometimes observed that the polyacetal resin composition obtained by blending the core/shell polymer in a molten state has unsatisfactory mechanical properties.

The shell phase preferably consists of a glass-like polymer comprising a vinyl copolymer having an oxygen-containing polar group and having a glass transition temperature of 40°C or above.

A core/shell polymer having no oxygen-containing polar group in the shell phase can scarcely achieve any matting effect (i.e., glossiness-reducing effect). On the other hand, a vinyl polymer which is not in the form of a core/shell structure according to the present invention but particles, even though having an oxygen-containing polar group, cannot fully achieve the above-mentioned effect.

As the monomers constituting the above-mentioned vinyl copolymer having an oxygen-containing polar group, (meth)acrylates of alcohols having an oxygen-containing polar group may be cited. Examples of the (meth)acrylates of alcohols having an oxygen-containing polar group include (meth)acrylates of alcohols having hydroxyl and/or glycidyl groups.

Examples of (meth)acrylates of alcohols having a hydroxyl group include hydroxyethyl (meth)acrylate and hydroxypropyl (meth)acrylate. It is preferable to use hydroxyethyl methacrylate.

Examples of (meth)acrylates of alcohols having a glycidyl group include glycidyl (meth)acrylate. It is preferable to use glycidyl methacrylate.

Examples of monomers constituting the glass-like polymer, other than the above-mentioned monomers having an oxygen-containing polar group, include alkyl (meth)acrylates such as methyl (meth)acrylate, ethyl (meth)acrylate and butyl (meth)acrylate and polymerisable vinyl monomers such as aromatic vinyls, for example, styrene, vinyltoluene and α-methylstyrene, aromatic vinylidene, vinyl cyanides, for example, acrylonitrile and methacrylonitrile, and vinylidene cyanide. It is particularly preferable to use methyl methacrylate or styrene/acrylonitrile.

The content of this shell phase preferably ranges from 10 to 50% by weight based on the whole core/shell polymer. When the content of this shell phase is less than the lower limit as specified above, only an insufficient weatherability is obtained. When the content thereof exceeds the upper limit, on the other hand, it is sometimes observed that the resin composition obtained by blending the core/shell polymer in a molten state has poor mechanical properties.

An intermediate phase may be located between the first phase and the final polymer phase. Such an intermediate phase may be formed by, for example, seed emulsion polymerisation of a polymerisable monomer having a functional group, for example, glycidyl methacrylate, methacrylic acid and hydroxyethyl methacrylate, a polymerisable monomer capable of forming a glass-like polymer. for example, methyl methacrylate, or a polymerisable monomer capable of forming a rubber-like polymer, for example, butyl acrylate.

The intermediate phase may be selected from among various ones depending on the properties of the desired core/shell polymer.

Further, the extent of polymerisation thereof may be optionally selected depending on the monomer to be employed. When a glass-like polymer is used as an intermediate phase, for example, the extent of polymerisation thereof may be calculated as a part of the shell. When a rubber-like polymer is used as an intermediate phase, on the other hand, the degree of polymerisation thereof may be calculated as a part of the core.

A core/shell polymer containing such an intermediate phase as the one described above may have a multi-layer structure, wherein another layer is located between the core and the shell, or a salami structure, wherein fine particles of the intermediate phase are dispersed in the core. In an extreme case of a core/shell polymer having said salami structure, the intermediate phase to be dispersed forms a new core at the centre of the core. A core/shell polymer of this structure is sometimes formed when a monomer such as styrene is used as a monomer constituting the intermediate phase.

When a core/shell polymer having an intermediate phase is employed, it is sometimes observed that the impact resistance and the flexural modulus are improved, the thermal deformation temperature is elevated and the appearance (surface peeling, suppression of pearl glossiness and colour changes due to a change in refractive index) are improved.

In the present invention, the emulsion polymerisation is carried out with the use of a surfactant such as a nonionic surfactant, an oligomeric anionic or non-ionic surfactant and/or a polymerisation initiator such as an azoic polymerisation initiator or a peroxide polymerisation initiator.

In the present invention, almost all non-ionic surfactants commonly used in the art are usable. Examples thereof include ether-type surfactants such as polyoxyethylene nonylphenyl ether, polyoxyethylene stearyl ether and polyoxyethylene lauryl ether, ester type surfactants such as polyoxyethylene monostearate, sorbitan ester type surfactants such as polyoxyethylene sorbitan monolaurate and block copolymers such as polyoxyethylenepolyoxypropylene block copolymer.

As the oligomeric anionic or non-ionic surfactant to be used in the present invention, those which have been used in emulsion polymerisation for special purposes may be used. Examples thereof include oligomeric surfactants represented by the following formula (refer to, for example, Japanese Patent Publication No. 34832/1972, Japanese Patent Publication No. 34833/1972 and Japanese Patent Publication No. 38080/1972): 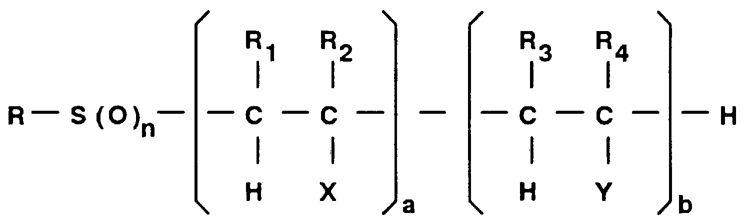 wherein the structural units 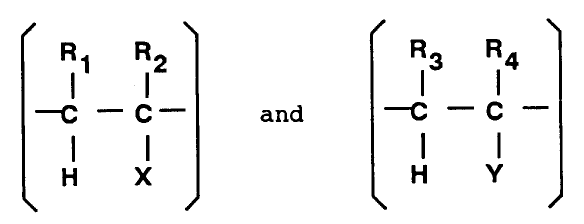 are usually distributed at random in the molecule. In the above formula, R represents an alkyl group having from 5 to 20, preferably from 6 to 12, carbon atoms. n is 0, 1 or 2 and preferably 0 or 1 and still more preferably 0. R₁ and R₃ each represent a -H, -CH₃, -C₂H₅ or -COOH group, while R₂ and R₄ each represents a -H, -CH₃, -C₂H₅, -COOH or -CH₂COOH group. X represents a -COOH, -CONH₂, -OCH₃ or -OC₂H₅ group, while Y represents a group selected from -CH₂OH, -CONH₂, -COOC₂H₄OH, -COOC₂H₆OH, -CONHCH₂OH, -CONHCH₃, -CONHC₂H₅, CONHC₃H₇, -COOCH₃, -COOC₂H₅, -CN, -OCOCH₃, -OCOC₂H₅, 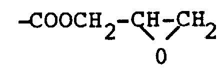 and

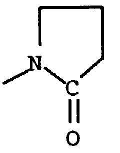

The molecular weight of the oligomeric surfactant to be used in the present invention suitably ranges from approximately 200 to 5000 and the degree of polymerisation thereof (a + b) suitably ranges from approximately 6 to 50.

In the present invention, the core/shell polymer may be added in an amount of from 1 to 50 parts by weight, preferably from 3 to 20 parts by weight, per 100 parts by weight of the polyacetal resin. When the amount of the core/shell polymer is excessively small, the effect of reducing the surface glossiness cannot be fully achieved. When its amount is excessively large, on the other hand, the mechanical properties, in particular, the stiffness, of the obtained composition are seriously deteriorated and the heat stability of the composition is undesirably affected.

When this core/shell polymer (C) is added together with the above-mentioned weathering (light) stabiliser (B) to the polyacetal resin, the surface glossiness of a moulded product thus obtained is uniformly reduced and, as a result, an appearance suggestive of calmness and high-quality is achieved. Simultaneously, the weatherability of the product is synergistically improved thereby. Furthermore, the obtained resin composition maintains the excellent mechanical properties inherent in polyacetal resins. The above-mentioned effect of reducing the surface glossiness may be established as follows. Namely, core/shell polymer particles of 0.5 to 2 µm are uniformly dispersed on the surface of the moulded product obtained by blending the core/shell polymer with the polyacetal, which makes the surface of the moulded product of polyacetal resin rough. At the same time, the oxygen-containing polar groups are also uniformly dispersed on the surface of the moulded product so as to modify the properties of the surface. Thus the low surface glossiness is obtained. It is preferable from the practical viewpoint that the surface glossiness, determined by the method (specular mould method) as will be specified below, is preferably 25% or below and particularly preferably 20% or below. In recent years, many interior automotive trims are leather- or stain-grained so as to improve the texture and to give an appearance suggestive of high-quality. It is therefore required to reduce the glossiness of a specular surface as well as to establish a good transferability to a grained surface. A common polyacetal resin has a poor transferability, seemingly due to a high crystallinity, and thus a decrease in the glossiness of a grained surface is smaller than that in a specular surface. In the composition of the present invention, in contrast, the surface of a moulded polyacetal resin product is modified and the transferability to a grained surface is extremely improved. As a result, the glossiness of the grained surface is further reduced.

Preferable examples of the moulded product according to the present invention include those having grained surfaces which are obtained by moulding a resin composition on an injection moulding machine provided with an injection mould having a grained inner surface. Such grained products include moulded products whose surface of is partly or entirely grained. Therefore, the inner surface of the mould to be used for forming them may be either partly or entirely grained depending on the purpose. The inner surface of the mould may be grained by, for example, etching, e.g., chemical etching, or electric arc machining. The roughness of the grain pattern may be appropriately selected depending on the appearance of the final moulded product.

The composition of the present invention may preferably contain colouring component(s) selected from among, for example, the following dyes and pigments.

The dyes and pigments to be used herein are not particularly restricted but arbitrarily selected from among those commonly employed for polyacetal resins. For example, anthraquinone dyes are preferable as dyes, while the pigments may be advantageously selected from among carbon black, azo pigments, phthalodyanine pigments, perylene pigments, quinacridone pigments, anthraquinone pigments, indoline pigments, titanium pigments, iron oxide pigments and cobalt pigments. Either one of these colouring components or a combination thereof may be used in the present invention.

Addition of carbon black as a colouring matter is effective in further elevating the weatherability of the composition. As the carbon black, those commonly employed for colouring plastics, for example, Micronex™, Acetylene Black or Ketjen Black™ may be used.

The content of the colouring component in the composition of the present invention may preferably range from 0.1 to 10 parts by weight, still preferably from 0.3 to 3 parts by weight, per 100 parts by weight of the polyacetal resin. When the content of the colouring component is smaller than 0.1 part by weight, any satisfactory colouring effect can be scarcely achieved. On the other hand, it is unnecessary to add the colouring component in an amount exceeding 10 parts by weight, since a larger content thereof rather deteriorates the physical properties and heat stability of the composition.

It is desirable that the composition of the present invention may further contain various known stabilisers so as to elevate the heat stability. Preferred examples of the stabilisers to be used for this purpose include known antioxidants, nitrogen-containing compounds, alkalis. alkaline earth compounds and mixtures thereof.

The composition of the present invention may further contain various known additives selected from among, for example, lubricants, nucleating agents, mould release agents, antistatic agents, other surfactants, organic polymers other than the component (C), inorganic or organic fibrous, powdery or plate fillers and mixtures thereof in order to impart properties suitable for the purpose in view.

The composition of the present invention may be prepared with the use of a known device and by a known method commonly employed in the art for preparing synthetic resin compositions. More specifically, the necessary components are mixed together, kneaded with the use of a single- or double-screw extruder, extruded so as to form pellets and then moulded.

Alternatively, the preparation of the composition may be effected simultaneously with moulding on a moulding machine. Alternatively, a part or the whole of the resin components is ground, mixed and melt-extruded, in order to thoroughly mix the components with each other, and then the pellets thus formed are moulded.

The above-mentioned stabilisers and additives may be added to the composition at any stage. It is needless to say that these additives may be added immediately before the formation of the final moulded product.

The resin composition according to the present invention may be moulded by extrusion moulding, injection moulding, vacuum moulding, blow moulding or foam moulding.

As the above description clearly shows, the composition of the present invention, wherein a polyacetal resin is blended with a weathering stabiliser and a specified core/shell polymer, can give excellent weatherability and be effective in considerably reducing the glossiness of the surface of a moulded product while maintaining the well-balanced mechanical properties of polyacetal.

Therefore, the polyacetal resin composition having a low glossiness of the present invention can be suitably used in interior automotive trims which may be desired to have an appearance suggestive of high-grade leather and a good weathering (light) resistance while avoiding reflection of light. Such resin composition may for example be used for the manufacture of regulator handles, interior clips and ventilator knobs. Such resin may also be used in the manufacture of optical instruments, building materials and household goods.

### EXAMPLES

To further illustrate the present invention in greater detail, and not by way of limitation, the following Examples and Comparative Examples will be given wherein all proportions are given in parts by weight. In these Examples, data employed for evaluating the surface conditions and mechanical properties were determined as follows.

### (1) Surface conditions

The surface conditions were evaluated in the following four ranks based on the mat finish and the surface uniformity. The test was performed by viewing a light from a fluorescent lamp in reflection at the surface of a test sample. A smaller figure means a better mat finish and a higher uniformity.
1: when light from a fluorescent lamp was reflected on the surface of a sample, the outlines of the lamp could not be observed and the surface was uniformly rough.
2: although the outlines of the lamp could not be observed, the surface was uneven, less uniform and rough.
3: the outlines of the lamp could be observed, though vaguely.
4: the outlines of the lamp could be clearly observed and the surface was scarcely uneven.

### (2) Surface glossiness

The following is the method of determining surface glossiness referred to in Claim 1 of this specification.

A test piece [70 mm × 40 mm × 3 mm (thickness)] is moulded under the following conditions in a specular mould.

| Moulding machine: IS80, manufactured, by Toshiba Corp. | | | | |
|---|---|---|---|---|
| Moulding conditions: | nozzle | C1 | C2 | C3 |
| cylinder temp. (°C) | 200 | 190 | 180 | 160 |
| injection pressure | 650 kg/cm² | | (64 MPa) | |
| injection rate | 1.0 m/min | | | |
| mould temp. (°C) | 80 | | | |

The glossiness of the test piece is measured at 45° - 45° reflection in accordance with JIS K7105 with the use of a digital variable angle gloss meter (UGV-40, manufactured by Suga Test Instruments Co., Ltd).

In the Examples which follow, a second method of measuring glossiness is also used. In this second method, a grained mould is substituted for the specular mould in order to form the test piece. Other moulding and testing conditions are unaltered.

### (3) Weatherability test

A test piece was irradiated with UV light with the use of an UV fadeometer (model FAL-AU H B Em, manufactured, by Suga Test Instruments Co., Ltd.) at a black panel temperature of 83°C and then the crack initiation time was measured and changes in the surface conditions were evaluated.

### (i) Crack initiation time

A test piece was irradiated with UV light under given conditions and the initiation or generation of cracking on the surface of the test piece was observed under a 10 × magnifying glass. A larger value means a better result.

### (ii) Changes in surface conditions

A test piece was irradiated with UV light under given conditions for 600 hours and 1,000 hours. Changes in the hue and cracking conditions of the test piece were observed before and after the irradiation and expressed in five ranks. A smaller value means a less change, i.e., reduced colour change or cracking.

### (4) Tensile test

The tensile strength and tensile elongation of a test piece were determined in accordance with ASTM D638. In Examples and Comparative Examples, the following abbreviations are used:

| | |
|---|---|
| ethyl acrylate | EA |
| methyl methacrylate | MMA |
| butyl acrylate | BA |
| 1,4-butylene glycol acrylate | BGA |
| allyl methacrylate | AIMA |
| methacrylamide | MAM |
| non-ionic surfactant (Emulgen 950™, a product of Kao Corp.) | E950 |
| oligomeric anionic surfactant (see below) | surfactant A |
| de-ionised water | DIW |
| 2,2'-azobis(2-aminopropane) dihydroxychloride (V 50, a product of Wako Pure Chemicals, Inc.) | V 50 |
| 2-hydroxyethyl methacrylate | HEMA |
| styrene | St |
| glycidyl methacrylate | GMA. |

The surfactant A was synthesised according to the description of Example 13 in Japanese Patent Laid Open No. 10682/1978, adjusted to pH 7.5 with aqueous ammonia and then to a solid content of 10% with pure water.

The chemical formula of the main component of the surfactant A was as follows: 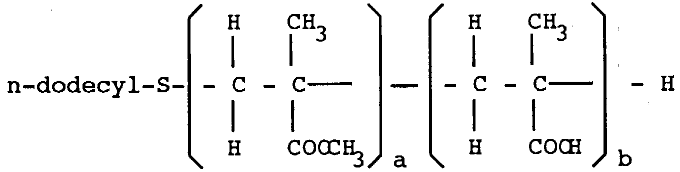 (wherein a : b = 3 : 7, a + b = 13.6 approx.).

The composition of the surfactant A was 155 g of methacrylic acid, 360 g of MMA, 109 g of n-dodecyl mercaptan, 4.4 g of azobisisobutyronitrile and 314 g of isopropanol, and the molecular weight thereof was 1310.

### PRODUCTION EXAMPLES 1 TO 3

### (Production of core/shell polymers 1 to 3)

1,200 g of DIW, 1.68 g of 25% aqueous ammonia, 7 g of surfactant A and 0.14 g of MAM were fed into a 5 L polymerisation vessel provided with a reflux condenser. Then the mixture was heated to 70°C with stirring in a nitrogen gas stream. Next, 27.86 g of a seed monomer mixture of the following composition was added thereto and dispersed therein in 10 minutes. Further, 21 g of a 10% aqueous solution of V 50 was added thereto and thus seed particles were polymerised.

| Composition of seed monomers: | |
|---|---|
| EA | 27.664 g |
| AIMA | 0.14 g |
| BGA | 0.056 g. |

After adding 7 g of MAM, a monomer emulsion, which was prepared by adding 210 g of surfactant A, 900 g of DIW and 2.80 g of 25% aqueous ammonia to 1,365 g of a core-part monomer mixture of the following composition, and a mixture of 21.0 g of a 10% aqueous solution of V 50 and 0.63 g of 1% aqueous ammonia were continuously fed in 180 minutes to thereby effect seed polymerisation.

| Composition of core-part monomer mixture: | |
|---|---|
| BA | 1215.2 g |
| MMA | 140.0 g |
| BGA | 2.8 g |
| AIMA | 7.0 g. |

After heating to 80°C and ageing for 1 hour, the mixture was cooled to 70°C.

Next, 9 g of a 10% aqueous solution of V 50 and 0.27 g of 1% aqueous ammonia were added thereto. Then a shell-part monomer emulsion of the following composition, 12 g of a 10% aqueous solution of V 50 and 0.36 g of 1% aqueous ammonia were continuously fed in 60 minutes to thereby perform seed polymerisation.

| Composition of shell-part monomer emulsion: | |
|---|---|
| MMA | 265.8 g |
| EA | 60.0 g |
| surfactant A | 30.0 g |
| DIW | 500.0 g |
| 25% aqueous ammonia | 0.72 g |
| St | 180.0 g |
| HEMA | 90.0 g |
| BGA | 1.2 g |
| MAM | 3.0 g. |

After heating to 80°C and ageing for 1 hour, the mixture was cooled and filtered through a 300-mesh stainless wire mesh to thereby give a core/shell polymer latex.

This latex was frozen at -15°C and filtered through a glass filter. Then it was dried with a fan over day and night to thereby give a core/shell polymer C-1.

The procedure of the above Production Example 1 was repeated except that each monomer as specified in Table 1 was used so as to obtain core/shell polymers C-2 and C-3.

**Table 1**

| | Monomer comp'n parts by weight | Core/shell polymer | |
|---|---|---|---|
| | | C-2 | C-3 |
| Core | BA | 1243.2 | 1250.2 |
| | MMA | 140.0 | 140.0 |
| | BGA | 2.8 | 2.8 |
| | AIMA | 14.0 | 7.0 |
| Shell | MMA | 448.8 | 478.8 |
| | EA | 60.0 | 60.0 |
| | GMA | - | 60.0 |
| | HEMA | 90.0 | - |
| | BGA | 1.2 | 1.2 |

As the seed monomer, 35 g of the core-part monomer mixture was employed.

### EXAMPLE 1

A polyacetal resin (A) (Duracon™, a product of Polyplastics, Co., Ltd.) was blended with the core/shell polymer C-1 produced above and weathering stabilisers (B-1 and B-3) at a ratio as specified in Table 2. After mixing on a Henschel mixer, the mixture was melt-kneaded with the use of a 30-mm twin-screw extruder so as to give a composition in the form of pellets. These pellets were then processed on an injection moulder under the aforementioned moulding condition to thereby give moulded test pieces, followed by the determining and evaluating of the glossiness and other properties thereof. Table 2 summarises the results.

### COMPARATIVE EXAMPLE 1

The procedure of the above Example 1 was repeated except that no core/shell polymer was added to the polyacetal resin. From the polyacetal composition thus obtained, test pieces were produced and evaluated. Table 3 summarises the results.

### EXAMPLES 2 TO 15

By using the core/shell polymers C-2 and C-3 produced by the above-mentioned methods, the polyacetal compositions as listed in Table 2 were prepared by the same method as the one employed in the above Example 1. Similarly, test pieces were produced therefrom and evaluated. Table 2 summarises the results.

### COMPARATIVE EXAMPLES 2 TO 9

Each composition, which was which was obtained by adding a core/shell polymer alone, or a weathering stabiliser alone, or a combination of a weathering stabiliser (D) and a colouring component or calcium silicate to a polyacetal resin as shown in Table 3, was produced and evaluated in the same manner as the one described in the above Example 1.

Table 3 summarises the results.

### COMPARATIVE EXAMPLES 10 TO 12

As Table 3 shows, compositions were produced and evaluated in the same manner as the one described in the above Example 1 by adding an ungrafted acryl resin instead of the component (B) or an acryl-modified graft copolymer free from any oxygen-containing polar group. Table 3 summarises the results.

In Tables 2 and 3:
*1)
   - B-1:: 2-[2-hydroxy-3,5-bis(a,a-dimethylbenzyl)phenyl]benzotriazole.
   - B-2:: 2-hydroxy-4-oxybenzylbenzophenone.
*2)
   - B-3:: bis(2,2,6,6-tetramethyl-4-piperidyl) sebacate.
   - B-4:: dimethyl succinate/l-(2-hydroxyethyl)-4-hydroxy-2,2,6,6-tetramethylpiperidine polycondensate.
*3)
   - D-1:: acetylene black.
   - D-2:: blue phthalocyanine pigment.
*4) Acryl resin:
   - C'-1:: P(MMA-HEMA), random copolymer of methyl methacrylate with hydroxyethyl methacrylate [MMA/HEMA: 8/2 (wt.%)].
   - C'-2:: P(MMA-GMA), random copolymer of methyl methacrylate with glycidylmethyl methacrylate [MMA/GMA: 8/2 (wt.%)].
   - C'-3:: Acryl cross-linked particles: P(BA-MMA)-g-PMMA, graft copolymer of random copolymer of butyl acrylate with methyl methacrylate and polymethyl methacrylate [(BA-MMA)/PMMA: 7/3 (wt.%)].

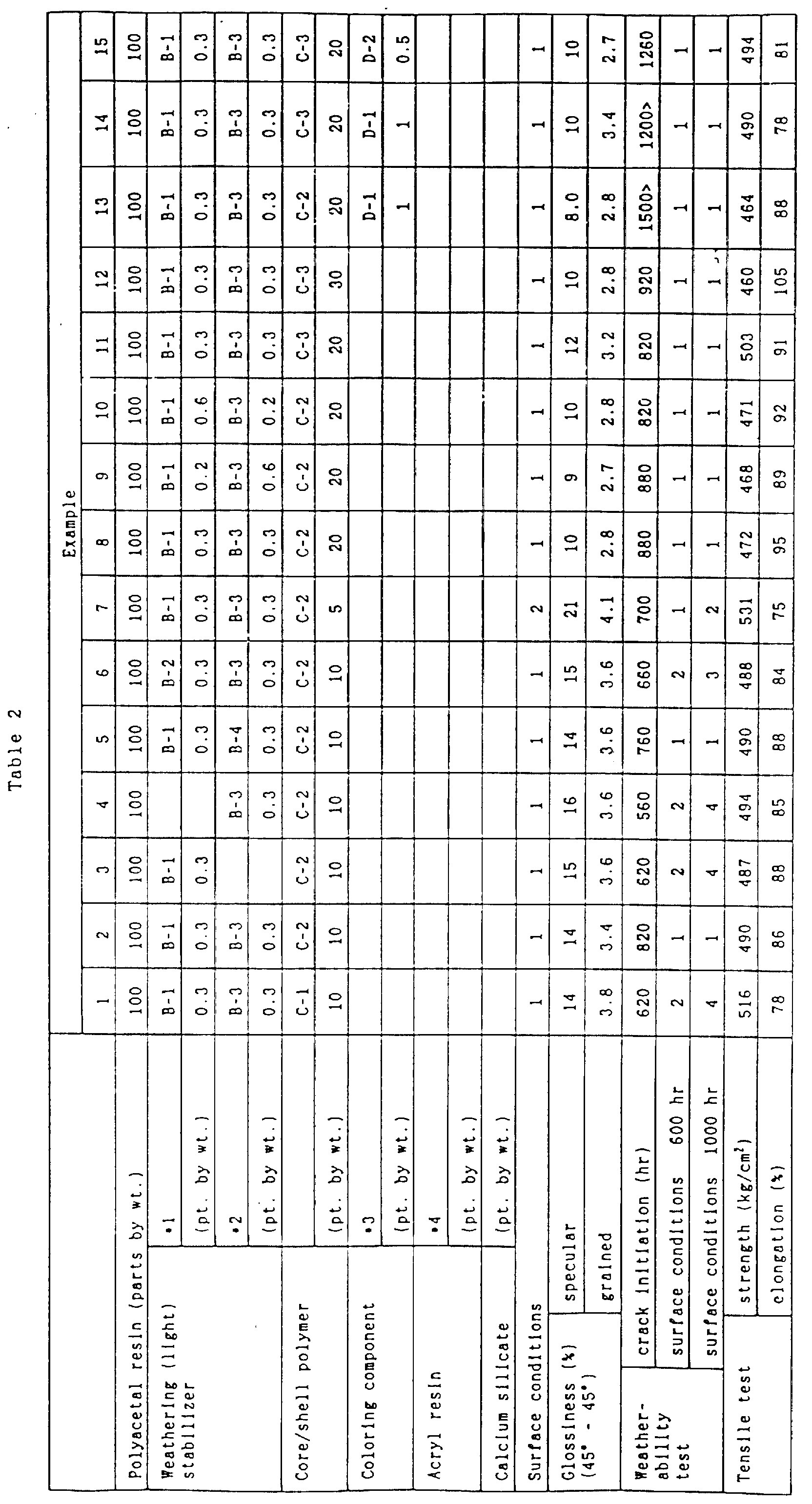

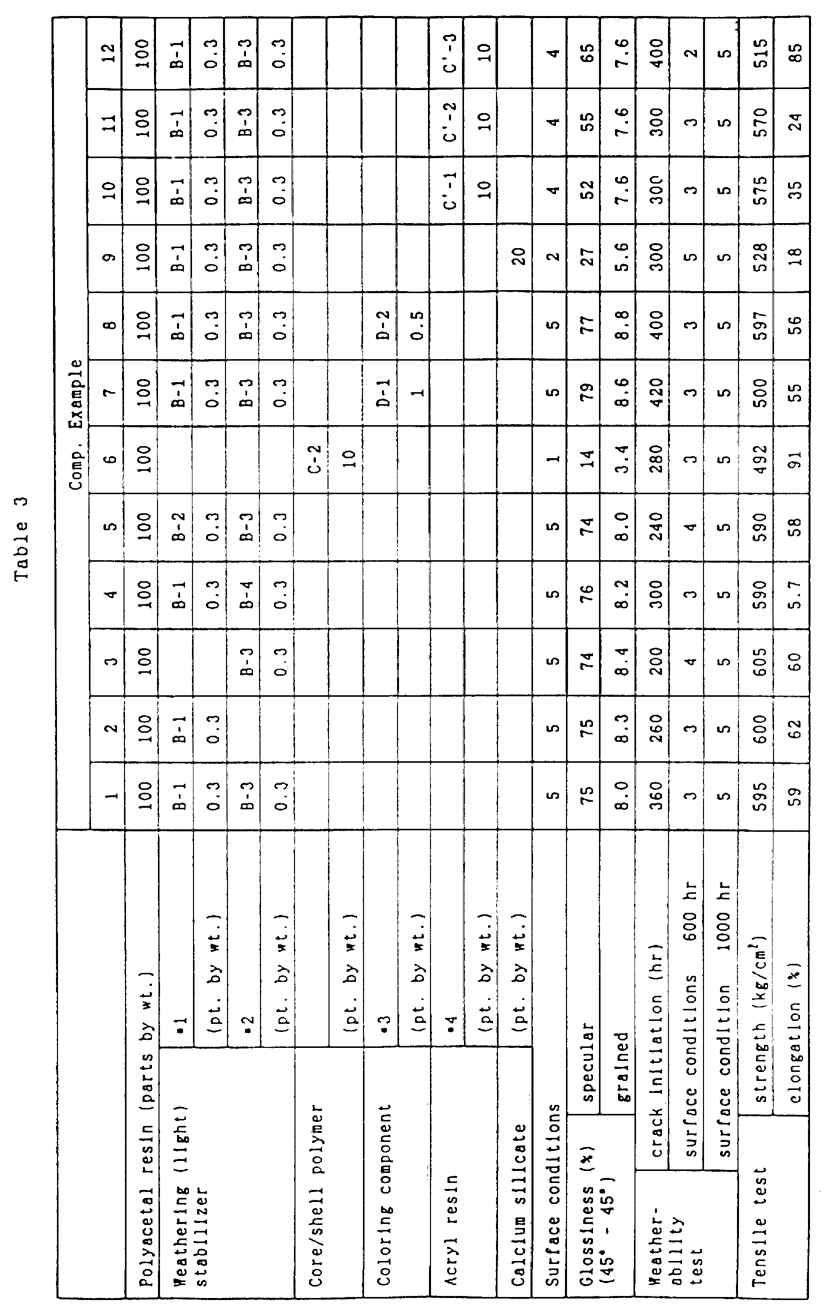

## Claims

1. A weather-resistant polyacetal resin composition which is capable of being moulded in a specular mould to form an article having a low glossiness, i.e. a glossiness of 30% or below determined in accordance with JIS K7105 by the method herein specified, and which is produced by blending:
(A) 100 parts by weight of a polyacetal resin with
(B) 0.01 to 5 parts by weight of a weathering (light) stabiliser and
(C) 1 to 50 parts by weight of a core/shell polymer consisting of a core of a rubber-like polymer and a shell of a glasslike polymer comprising a vinyl copolymer having an oxygen-containing polar group.

2. A weather-resistant polyacetal resin composition having a low glossiness as claimed in Claim 1, wherein said weathering (light) stabiliser (B) is one or more substances selected from the group consisting of benzotriazole derivatives, benzophenone derivatives, oxanilide derivatives, aromatic benzoates, cyanoacrylates and hindered amines.

3. A weather-resistant polyacetal resin composition having a low glossiness as claimed in Claim 2, wherein said weathering (light) stabiliser (B) is a combination of one or more hindered amines with one or more substances selected from the group consisting of benzotriazole derivatives, benzophenone derivatives, oxanilide derivatives, aromatic benzoates and cyanoacrylates.

4. A weather-resistant polyacetal resin composition having a low glossiness as claimed in Claim 1, wherein one of the constituents of the vinyl copolymer having an oxygen-containing polar group of said core/shell polymer (C) is (meth)acrylate of an alcohol having an oxygen-containing polar group.

5. A weather-resistant polyacetal resin composition having a low glossiness as claimed in Claim 4, wherein the oxygen-containing polar group of said core/shell polymer (C) is a hydroxyl group and/or glycidyl group.

6. A weather-resistant polyacetal resin composition having a low glossiness as claimed in Claim 4, wherein the (meth)acrylate of said core/shell polymer (C) is hydroxyethyl methacrylate group or glycidyl methacrylate.

7. A weather-resistant polyacetal resin composition having a low glossiness as claimed in Claim 1, wherein said core/shell polymer (C) is one obtained by emulsion polymerisation with the use of an oligomeric surfactant.

8. A weather-resistant polyacetal resin composition having a low glossiness as claimed in Claim 1, wherein said core/shell polymer (C) is one obtained by emulsion polymerisation with the use of a non-ionic surfactant.

9. A weather-resistant polyacetal resin composition having a low glossiness, which is obtained by further adding to the composition as claimed in Claim 1:
(D) 0.1 to 10 parts by weight, based on 100 parts by weight of the polyacetal resin, of a colouring component.

10. A moulded polyacetal resin product having a low glossiness, i.e. a glossiness of 30% or below determined in accordance with JIS K7105 by the method herein specified, and produced by moulding the composition as claimed in Claim 1.

11. A moulded polyacetal resin product produced by moulding the composition as claimed in Claim 1, the surface of which is partly or entirely grained.

## Patentansprüche

1. Witterungsbeständige Polyacetalharz-Zusammensetzung, die dazu geeignet ist, in einem spiegelblanken Formwerkzeug formgepreßt zu werden, wodurch ein Gegenstand mit einem niedrigen Glanz, d.h. einem Glanz von 30 % oder weniger, bestimmt gemäß JIS K7105 durch das hier aufgeführte Verfahren, gebildet wird, und die hergestellt wird, indem:
(A) 100 Gew.-Teile eines Polyacetalharzes mit
(B) 0,01 bis 5 Gew.-Teilen eines Verwitterungs- (Licht-) stabilisators und
(C) 1 bis 50 Gew.-Teilen eines Kern-/Schale-Polymers, bestehend aus einem Kern aus einem kautschukartigen Polymer und einer Schale aus einem glasartigen Polymer, umfassend ein Vinyl-Copolymer mit einer sauerstoffhaltigen, polaren Gruppe,
vermischt werden.

2. Witterungsbeständige Polyacetalharz-Zusammensetzung mit einem niedrigen Glanz nach Anspruch 1, wobei es sich bei dem Verwitterungs- (Licht-)stabilisator (B) um eine oder mehrere Substanzen handelt, die aus der aus Benzotriazolderivaten, Benzophenonderivaten, Oxanilidderivaten, aromatischen Benzoaten, Cyanoacrylaten und gehinderten Aminen bestehenden Gruppe ausgewählt sind.

3. Witterungsbeständige Polyacetalharz-Zusammensetzung mit einem niedrigen Glanz nach Anspruch 2, wobei es sich bei dem Verwitterungs- (Licht-)stabilisator (B) um eine Kombination aus einem oder mehr gehinderten Aminen mit einer oder mehreren Substanzen handelt, die aus der aus Benzotriazolderivaten, Benzophenonderivaten, Oxanilidderivaten, aromatischen Benzoaten und Cyanoacrylaten bestehenden Gruppe ausgewählt sind.

4. Witterungsbeständige Polyacetalharz-Zusammensetzung mit einem niedrigen Glanz nach Anspruch 1, wobei es sich bei einem der Bestandteile des Vinyl-Copolymers mit einer sauerstoffhaltigen, polaren Gruppe des Kern-/Schale-Polymers (C) um das (Meth)acrylat eines Alkohols mit einer sauerstoffhaltigen, polaren Gruppe handelt.

5. Witterungsbeständige Polyacetalharz-Zusammensetzung mit einem niedrigen Glanz nach Anspruch 4, wobei es sich bei der sauerstoffhaltigen, polaren Gruppe des Kern-/Schale-Polymers (C) um eine Hydroxylgruppe und/oder Glycidylgruppe handelt.

6. Witterungsbeständige Polyacetalharz-Zusammensetzung mit einem niedrigen Glanz nach Anspruch 4, wobei es sich bei dem (Meth)acrylat des Kern-/Schale-Polymers (C) um eine Hydroxyethylmethacrylat-Gruppe oder Glycidylmethacrylat handelt.

7. Witterungsbeständige Polyacetalharz-Zusammensetzung mit einem niedrigen Glanz nach Anspruch 1, wobei es sich bei dem Kern-/Schale-Polymer (C) um eines handelt, das durch Emulsionspolymerisation unter Verwendung eines oligomeren Tensids erhalten wird.

8. Witterungsbeständige Polyacetalharz-Zusammensetzung mit einem niedrigen Glanz nach Anspruch 1, wobei es sich bei dem Kern-/Schale-Polymer (C) um eines handelt, das durch Emulsionspolymerisation unter Verwendung eines nichtionischen Tensids erhalten wird.

9. Witterungsbeständige Polyacetalharz-Zusammensetzung mit einem niedrigen Glanz, die erhalten wird, indem darüber hinaus:
(D) 0,1 bis 10 Gew.-Teile, bezogen auf 100 Gew.-Teile des Polyacetalharzes, einer farbgebenden Komponente
zur Zusammensetzung nach Anspruch 1 gegeben werden.

10. Formgepreßtes Polyacetalharz-Produkt mit einem niedrigen Glanz, d.h. einem Glanz von 30 % oder weniger, bestimmt gemäß JIS K7105 durch das hier aufgeführte Verfahren, das durch das Formpressen der in Anspruch 1 beanspruchten Zusammensetzung hergestellt wird.

11. Formgepreßtes Polyacetalharz-Produkt, hergestellt durch das Formpressen der in Anspruch 1 beanspruchten Zusammensetzung, dessen Oberfläche teilweise oder vollständig körnig ist.

## Revendications

1. Composition de résine de polyacétal résistant aux agents atmosphériques, qui est apte à être moulée dans un moule spéculaire pour former un article ayant un faible brillant, à savoir un brillant de 30 % ou moins, déterminé selon JIS K7105 par la méthode spécifiée ici, et qui est fabriquée en mélangeant :
(A) 100 parties en poids d'une résine de polyacétal avec
(B) 0,01 à 5 parties en poids d'un stabilisant aux agents atmosphériques (à la lumière) et
(C) 1 à 50 parties en poids d'un polymère coeur/enveloppe constitué d'un coeur en polymère semblable au caoutchouc et d'une enveloppe en polymère semblable au verre comprenant un copolymère vinylique ayant un groupe polaire contenant de l'oxygène.

2. Composition de résine de polyacétal résistant aux agents atmosphériques ayant un faible brillant selon la revendication 1, dans laquelle ledit stabilisant aux agents atmosphériques (à la lumière) (B) est une ou plusieurs substances choisies dans le groupe constitué des dérivés du benzotriazole, des dérivés de la benzophénone, des dérivés de l'oxanilide, des benzoates aromatiques, des cyanoacrylates et des amines empêchées.

3. Composition de résine de polyacétal résistant aux agents atmosphériques ayant un faible brillant selon la revendication 2, dans laquelle ledit stabilisant aux agents atmosphériques (à la lumière) (B) est une combinaison d'une ou plusieurs amines empêchées avec une ou plusieurs substances choisies dans le groupe constitué des dérivés du benzotriazole, des dérivés de la benzophénone, des dérivés de l'oxanilide, des benzoates aromatiques et des cyanoacrylates.

4. Composition de résine de polyacétal résistant aux agents atmosphériques ayant un faible brillant selon la revendication 1, dans laquelle l'un des constituants du copolymère vinylique ayant un groupe polaire contenant de l'oxygène dudit polymère coeur/enveloppe (C) est un (méth)acrylate d'un alcool ayant un groupe polaire contenant de l'oxygène.

5. Composition de résine de polyacétal résistant aux agents atmosphériques ayant un faible brillant selon la revendication 4, dans laquelle le groupe polaire contenant de l'oxygène dudit polymère coeur/enveloppe (C) est un groupe hydroxyle et/ou un groupe glycidyle.

6. Composition de résine de polyacétal résistant aux agents atmosphériques ayant un faible brillant selon la revendication 4, dans laquelle le (méth)acrylate dudit polymère coeur/enveloppe (C) est du méthacrylate d'hydroxyéthyle ou méthacrylate de glycidyle.

7. Composition de résine de polyacétal résistant aux agents atmosphériques ayant un faible brillant selon la revendication 1, dans laquelle ledit polymère coeur/enveloppe (C) est obtenu par polymérisation en émulsion en utilisant un agent tensioactif oligomère.

8. Composition de résine de polyacétal résistant aux agents atmosphériques ayant un faible brillant selon la revendication 1, dans laquelle ledit polymère coeur/enveloppe (C) est obtenu par polymérisation en émulsion en utilisant un agent tensioactif non ionique.

9. Composition de résine de polyacétal résistant aux agents atmosphériques ayant un faible brillant, qui est obtenue en ajoutant en outre à la composition telle que revendiquée dans la revendication 1 :
(D) 0,1 à 10 parties en poids, sur la base de 100 parties en poids de la résine de polyacétal, d'un constituant colorant.

10. Produit moulé en résine de polyacétal, ayant un faible brillant, à savoir un brillant de 30 % ou moins, déterminé selon JIS K7105 par la méthode spécifiée ici, et fabriqué en moulant la composition telle que revendiquée dans la revendication 1.

11. Produit moulé en résine de polyacétal, fabriqué en moulant la composition telle que revendiquée dans la revendication 1, dont la surface est partiellement ou entièrement grainée.
